(19) **Europäisches Patentamt
European Patent Office
Office européen des brevets**

(11) **EP 4 693 024 A1**

(12) **EUROPEAN PATENT APPLICATION**

(43) Date of publication:
**11.02.2026 Bulletin 2026/07**

(21) Application number: **24197944.2**

(22) Date of filing: **02.09.2024**

(51) International Patent Classification (IPC):
***G06F 8/41*** *(2018.01)*

(52) Cooperative Patent Classification (CPC):
**G06F 8/443; G06F 8/441**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.08.2024 US 202418795335**

(71) Applicant: **MediaTek Inc.
30078 Hsinchu City (TW)**

(72) Inventors:
• **RAMANARAYANAN, Ramshankar
San Jose (US)**

• **SONG, Litong
San Jose (US)**
• **LIN, Shih-Han
Hsinchu City (TW)**
• **WU, Yao-Ting
Hsinchu City (TW)**
• **LIN, Hsin-Hsiao
San Jose (US)**
• **CHEN, Chung-Shu
San Jose (US)**
• **KOTARI, Preethi
San Jose (US)**

(74) Representative: **Hoefer & Partner Patentanwälte
mbB
Pilgersheimer Straße 20
81543 München (DE)**

(54) **PROACTIVE REGISTER PROMOTION OF AGGREGATES AMID CONTROL FLOW FOR GPU WORKLOADS**

(57) In an aspect of the disclosure, a method, a computer-readable medium, and an apparatus are provided. The apparatus identifies load and store operations in program code that access an array of structures (1102). The apparatus assigns metadata to each of the identified load and store operations (1104). The metadata associated with each operation represents a structure of the array. The apparatus generates oracle conditions for the program code based on the metadata to facilitate register promotion (1106). One or more indices of the array accessed by the load and store operations are not known at compile time.

FIG. 11

EP 4 693 024 A1

Description

BACKGROUND

Field

The present disclosure relates generally to communication systems, and more particularly, to techniques of proactive register promotion in graphics processing units.

Background

Single instruction, multiple threads (SIMT) is a parallel execution model adopted by some modern graphics processing units (GPUs). Such a GPU can execute a single instruction on multiple threads concurrently in lock-step by utilizing its parallel data paths. Single-program multiple-data (SPMD) accelerator languages such as CUDA® and OpenCL® have been developed to enhance the computing performance of GPUs that have the SIMT architecture.

Some modern GPUs can execute a single instruction on more threads than the number of its parallel data paths. For example, a processor with 32 parallel data paths may execute one instruction on 128 threads in 4 sequential cycles. These 128 threads are hereinafter referred to as a thread block. All of the threads in a thread block share one program counter and instruction fetch, and are executed in lock-step, e.g., 32 threads in each of the 4 sequential cycles.

SIMT reduces program counters and instruction fetching overhead, but in some scenarios suffers from poor utilization of computing resources due to the lock-step execution model. For example, to handle an if-else block where various threads of a processor follow different control-flow paths, the threads that follow the "else" path are disabled (waiting) when the threads that follow the "if" path execute, and vice versa. That is, one control-flow path is executed at a time, even though the execution is useless for some of the threads. Furthermore, poor utilization also comes from redundant bookkeeping across the threads. For example, in a while-loop, all threads of a processor execute the loop count increment in lock-step even though the increment is uniform (i.e., the same) across all threads. In addition to redundant loop count calculations, often times threads calculate the same branch conditions, replicate the same base addresses, and perform similar address calculations to retrieve data from data arrays. Therefore, there is a need for reducing the redundancy in SIMT computing to improve system performance.

SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. A method, an apparatus, and a computer-readable medium according to the invention are defined in the independent claims. The dependent claims define preferred embodiments thereof.

In an aspect of the disclosure, a method, a computer-readable medium, and an apparatus are provided. The apparatus identifies load and store operations in program code that access an array of structures. The apparatus assigns metadata to each of the identified load and store operations. The metadata associated with each operation represents a structure of the array. The apparatus generates oracle conditions for the program code based on the metadata to facilitate register promotion. One or more indices of the array accessed by the load and store operations are not known at compile time.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

BRIEF DESCRIPTION OF THE DRAWINGS

FIG. 1 is a diagram illustrating a GPU.
FIG. 2 is a diagram illustrating the first technique for register promotion.
FIG. 3(A) is a diagram illustrating code of a function utilizing an advance data structure.
FIG. 3(B) is a diagram illustrating fields of the structure of FIG. 3(A) after linearization.

FIG. 4 shows code that performs non-constant stores and loads.
FIG. 5(A) shows code for register promotion in the first technique.
FIG. 5(B) shows code for register promotion in the second technique.
FIG. 6(A) shows exemplary code of a two-dimensional array.
FIG. 6(B) shows exemplary generated code.
FIG. 7(A) shows exemplary code illustrating Algorithm-1.
FIG. 7(B) shows exemplary code illustrating Algorithm-2.
FIG. 8 shows exemplary code of an oracle insertion algorithm for stores.
FIG. 9 shows exemplary code of an oracle insertion algorithm for loads.
FIG. 10 is a flow chart illustrating the oracle insertion phase of the second technique.
FIG. 11 is a flow chart of a method (process) for generating code for a graphics processing unit (GPU).
FIG. 12 is a diagram illustrating an example of a hardware implementation for an apparatus employing a processing system.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

[[FIG. 1]]

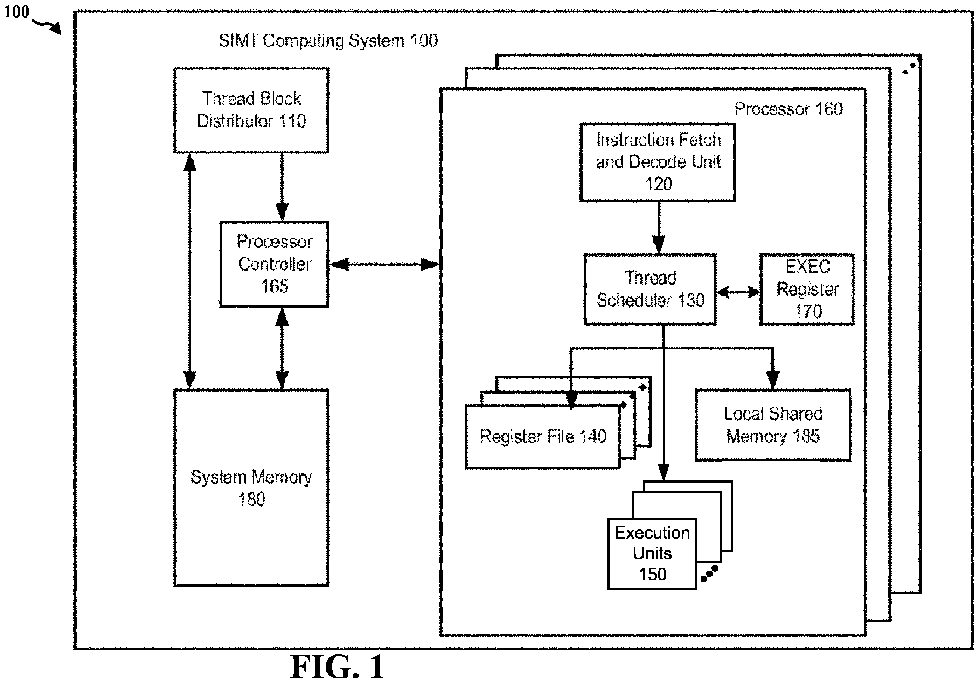

FIG. 1 is a diagram illustrating a GPU. In this example, a GPU 110 That is, the network can directly schedule the next uplink transmission using SPS without waiting for the decoding result of the previous transmission, thereby reducing the overall latency and improving the efficiency of the system.

The SIMT computing system 100 includes a plurality of processors 160. Processing tasks enters the SIMT computing system 100 in the form of threads organized as thread blocks. Each processor 160 may process multiple thread blocks concurrently. Each thread block contains a group of threads that share the same instruction. Each thread has its own register file 140 , and shares data with other threads in the thread block via a local shared memory 185.

The SIMT computing system 100 also includes a thread block distributor 110, which schedules and distributes thread blocks to the processors 160 via a processor controller 165. When a thread block is scheduled to a processor 160, the processor's instruction fetch and decode unit 120 fetches and decodes an instruction, and a thread scheduler 130 schedules the instruction and the threads in the thread block for execution in appropriate cycles; e.g., when the source operands of the instruction for these threads become available. The source operands may include a constant, or may be fetched from the register files 140 or memory, such as system memory 180, the local shared memory 185, cache memory or other register locations. Then the instruction along with the source operands are sent to the processor's execution units 150 for execution. The execution units 150 may include arithmetic logic units (ALUs), floating point units (FPUs), special function units (SFUs) and load/store units (LSUs) to execute different types of instructions. After the execution, the result data is written to the register files 140 or register locations.

Memory accesses, such as loads and stores, can be expensive operations in terms of latency and energy consumption. Registers, on the other hand, provide much faster access to data. Scalarization is a compiler optimization technique that aims to reduce memory accesses by promoting data from memory to registers. This can significantly improve the performance of GPU workloads, especially when dealing with memory-intensive operations.

Register promotion, also known as scalarization, is an optimization technique in modern compilers that aims to reduce memory accesses by promoting data from memory to registers. This transformation is particularly important for GPUs, which often face the "memory wall" problem, where memory accesses become a bottleneck in terms of latency and energy consumption. By working with data in registers instead of loading and storing data to memory, register promotion can significantly improve the performance of GPU workloads.

However, register promotion is not straightforward without advance knowledge of all indexes being accessed. The currently used compiler solutions have limitations in this aspect. For example, store addresses must be known at compile time, and the index from the stack pointer, which is an integer value, must also be known at compile time. This requirement for static addresses poses a significant challenge for register promotion.

**[[1st technique]]**

In a first technique, support for some "dynamic" index cases is provided by using "oracle conditionals." Oracle conditionals are a way to add code to the program that specifies the possible choices for an address. When a particular choice is met, the corresponding value is used. For example, if the index is zero, the value stored at a first location is used, and if the index is one, the value stored at a second location is used, and so on. This approach allows for scalarization even when the exact address is not known at compile time.

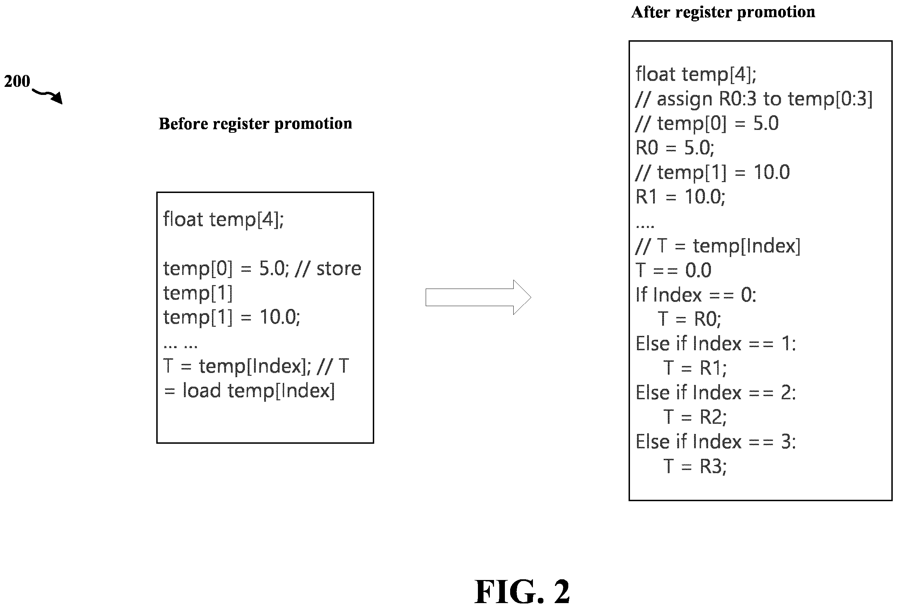

FIG. 2 is a diagram 200 illustrating the first technique for register promotion. More specifically, FIG. 2 shows certain code before register promotion and after register promotion.

The code before register promotion relies on memory access to store and retrieve values from the 'temp' array. The index used to access the array elements ('Index') is unknown at compile time, making it a dynamic access pattern. This poses a problem for optimization techniques like scalarization, which aim to reduce memory operations by utilizing registers for data storage and manipulation.

To perform register promotion, the compiler needs to know the possible values of Index to determine which elements of the array can be promoted to registers. The first technique handles this situation by using conditional statements. The compiler can generate code that checks the value of Index and selects the appropriate register based on the index value.

In this transformed code, the elements of the array temp are promoted to registers R0 to R3. The value of T is then determined based on the value of Index using conditional statements. This approach allows the compiler to perform register promotion even when the index is unknown at compile time, by generating an "oracle" that selects the appropriate register based on the index value.

In this example, the values 5.0 and 10.0 are stored at indices 0 and 1, respectively. When loading from an unknown index at compile time (the variable "Index"), the compiler generates oracle conditionals. If the index is zero, R0 is used directly, and if the index is one, R1 is used, and so on. This approach allows for scalarization by using registers instead of memory accesses, albeit at the cost of some extra operations.

By using oracle conditionals, the compiler can avoid memory accesses and perform scalarization even when the exact address is not known at compile time. This technique is particularly useful for GPU workloads, where memory accesses can be a significant performance bottleneck.

However, this approach has limitations. It requires the compiler to generate additional conditional statements, which can increase the code size and execution time. Furthermore, it may not be feasible for large arrays or complex access patterns, as the number of conditional statements would grow exponentially.

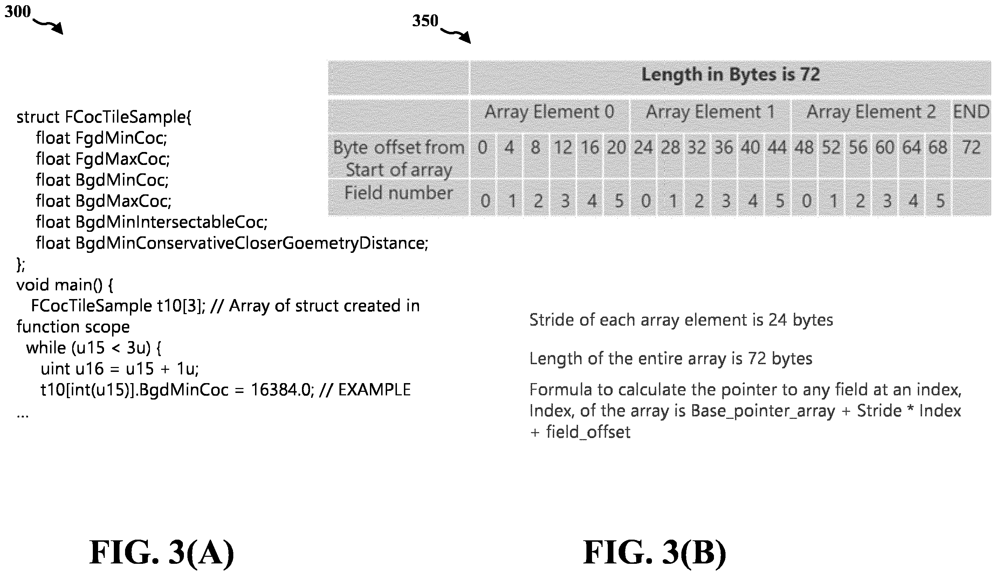

FIG. 3(A) is a diagram illustrating code 300 of a function utilizing an advance data structure. In this example, FCocTileSample is a structure containing six float fields, and t10 is an array of three such structures created in the function scope. The code dynamically stores a value (16384.0) into the BgdMinCoc field of one of the structures in the array, based on the value of u15.

Current compilers implementing the first technique described *supra* operate on a flattened memory representation when dealing with arrays of structures. This means that the structure's type information is lost during the compilation process, and the compiler only sees a linear layout of the array elements in memory.

FIG. 3(B) is a diagram 350 illustrating fields of the structure of FIG. 3(A) after linearization.

The compiler pass only sees the byte offsets from the start of the array and does not have information about the field numbers in the last row. This lack of structure information leads to the generation of inefficient code.

The compiler is unable to distinguish field accesses within the structure because it works on a linear layout. As a result, the generated code is suboptimal, as the compiler cannot take advantage of the structure's type information to optimize the code.

To calculate the pointer to any field at an index Index of the array, the compiler may use the below the formula:

$$Base\_pointer\_array + Stride \times Index + field\_offset$$

where Stride is the size of each array element (24 bytes in this case), and field_offset is the offset of the desired field within the structure.

The loss of structure information in the compiler's intermediate representation hinders its ability to generate efficient code for advanced data structures like arrays of structures. This limitation motivates the need for techniques that preserve and utilize the structure's type information during the compilation process to enable more effective optimizations.

**[[Deficiencies of a Flattened Structure]]**

When dealing with arrays of structures, current compilers that implement the first technique described above operate on a flattened memory representation. This means that the structure's type information is lost during the compilation process, and the compiler only sees a linear layout of the array elements in memory. As a result, the compiler is unable to distinguish field accesses within the structure, leading to the generation of inefficient code.

Consider the example shown in FIG. 3(A), where FCocTileSample is a structure containing six float fields, and t10 is an array of three such structures. The code dynamically stores a value (16384.0) into the BgdMinCoc field of one of the structures in the array, based on the value of u15.

In this code, the BgdMinCoc field, which is the third element of the structure, is being written to at an unknown index at compile time. If the structure layout information is lost due to flattening, the compiler will not know that BgdMinCoc is the third element of the structure within the array. Instead, it will treat the array as a series of elementary values, requiring a larger number of conditional statements to handle all possible offsets.

Ideally, since there are only three instances of BgdMinCoc in the array of structures, the compiler should generate code with just three conditional statements to handle the possible indices. However, when the structure information is flattened, the compiler loses track of which offsets correspond to the BgdMinCoc field, resulting in a larger number of conditional statements to cover all possible byte offsets within the array.

For example, the compiler may generate code that has 18 conditional statements to cover all possible byte offsets, even though only three are actually needed for the BgdMinCoc field. The loss of structure information due to flattening may lead to suboptimal code generation, as the compiler is unable to take advantage of the knowledge that only specific offsets correspond to the desired field. This results in unnecessary conditional statements and reduced performance.

However, if the structure information is preserved, the compiler would only need to generate three conditional statements, one for each structure in the array. By maintaining the structure's type information, the compiler can optimize the code more effectively, reducing the number of conditional statements and improving overall performance.

The loss of structure information in the compiler's intermediate representation hinders its ability to generate efficient code for advanced data structures like arrays of structures. This limitation highlights the need for techniques that preserve and utilize the structure's type information during the compilation process to enable more effective optimizations and generate more efficient code.

**[[2nd technique - Access Vector Metadata]]**

To address the limitations of current compilers when dealing with arrays of structures, a second technique preserves and utilizes the structure's type information during the compilation process. This technique involves storing a data structure called "access

vector metadata" in the compiler's intermediate representation.

Access vector metadata is a three-tuple per dimension of an array, consisting of (Offset, Length, Stride). In the given example, the Offset represents the field offset within the structure, the Length represents the dimension of the array, and the Stride represents the size of each array element or the size of the struct.

For instance, in the code of FIG. 3(A) again, the structure FCocTileSample contains six float values, each occupying four bytes. The stride of the structure is 24 bytes, meaning that each structure instance occupies 24 bytes in the array. The field BgdMinCoc is located at an offset of eight bytes from the start of the structure.

The access vector metadata for the store operation t10[int(u15)].BgdMinCoc = 16384.0; would be represented as access_vector(8, 3, 24). The offset of 8 indicates that BgdMinCoc is the third element in the structure (after FgdMinCoc at offset 0 and FgdMaxCoc at offset 4), the length of 3 represents the size of the array t10, and the stride of 24 represents the size of each FCocTileSample instance.

This access vector metadata is added to each load and store operation in the compiler's intermediate representation by the compiler front-end. For example, the intermediate representation of the store operation t10 [int(u15)].BgdMinCoc = 16384.0; would be: store pointer, 16384.0, access_vector(8, 3, 24)

By preserving the structure's type information through access vector metadata, the compiler can generate more precise and efficient conditional statements for advanced data types like arrays of structures. Instead of generating a large number of conditional statements based on the flattened memory layout, the compiler can use the access vector metadata to determine the exact offsets and generate only the necessary conditional statements.

For example, the code in FIG. 3(A) includes the line below that dynamically assigns a value to the BgdMinCoc field based on the runtime value of u15, which is constrained to be less than 3.

$$t10[int(u15)].BgdMinCoc = 16384.0;$$

Without the access vector metadata as in the first technique, the compiler would struggle to optimize this operation due to the dynamic nature of the index and the complex data structure.

In the second technique, by knowing the exact layout and size of the data structures involved, the compiler can effectively translate high-level code into optimized machine-level instructions that make better use of the GPU's registers. The oracle conditions generated from the access vector metadata may be as follows:

$$
\begin{aligned}
&\text{if } (u15 == 0) \{ \\
&\quad *(Base\_pointer + 8) = 16384.0; \text{ // First element} \\
&\} \text{ else if } (u15 == 1) \{ \\
&\quad *(Base\_pointer + 8 + 24) = 16384.0; \text{ // Second element} \\
&\} \text{ else if } (u15 == 2) \{ \\
&\quad *(Base\_pointer + 8 + 48) = 16384.0; \text{ // Third element} \\
&\}
\end{aligned}
$$

Here, Base_pointer represents the starting address of the array t10. The offset and stride values from the access vector are used to calculate the exact memory addresses for the BgdMinCoc field in each structure within the array.

Furthermore, this technique naturally extends to multi-dimensional arrays. Although the simplified example only demonstrates a one-dimensional array, the access vector metadata can be extended to support multiple dimensions by using an access vector list. Each dimension of the array would have its own access vector tuple, allowing the compiler to handle multi-dimensional arrays efficiently.

The introduction of access vector metadata in the compiler's intermediate representation enables more precise handling of arrays of structures and multi-dimensional arrays. By preserving the structure's type information, the compiler can generate more efficient code with fewer conditional statements, leading to improved performance and reduced redundancy in SIMT computing.

**[[non-constant stores and loads]]**

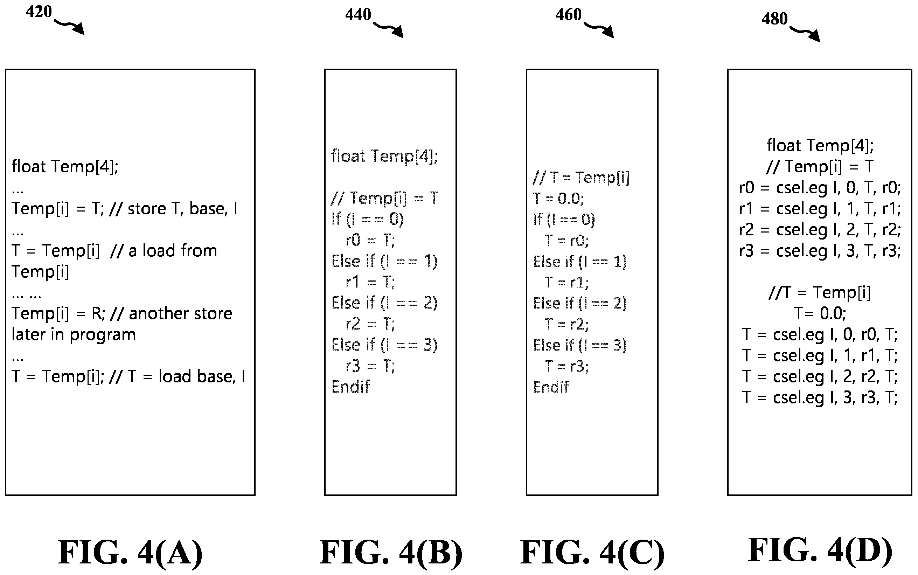

FIG. 4 shows code 420 that performs non-constant stores and loads. The first technique described *supra* for register promotion may require that each address is stored only once, and the values being stored must be constants or uniform values at compile time. Uniform values are those that remain the same across all threads in a shader program, even if they are not known at compile time.

However, the second technique described here may extends the capabilities of register promotion to support non-constant stores and loads. This means that the technique can handle cases where values are stored to and loaded from unknown addresses at compile time, and these values can be varying across threads (i.e., non-uniform).

In the code shown in FIG. 4(A), a value T is stored at an unknown index i in the array Temp, and later, a value is loaded from the same index i into T. Additionally, another value R is stored at the same unknown index i later in the program, and then a value is loaded from index i into T again.

The second technique can handle such cases by generating oracle codes around the stores and loads, and using a compiler algorithm to propagate the data flow of the values. The oracle codes are conditional statements that determine which register to use based on the value of the unknown address i.

FIG. 4(B) shows oracle code 440 generated for the store operation Temp[i] = T. FIG. 4(C) shows oracle code 460 generated for the load operation T = Temp[i].

To handle the data flow between these multiple non-constant stores and loads, the compiler may use a data flow propagation algorithm. This algorithm tracks the values stored in each register and propagates them to the appropriate load operations. By doing this, the correct values are loaded from the registers, even in the presence of multiple non-constant stores and loads.

The data flow propagation algorithm allows the compiler to handle complex cases where the values stored in registers may be overwritten by subsequent store operations. By tracking the data flow and propagating the values correctly, the compiler can generate efficient code that correctly handles multiple non-constant stores and loads.

The access vector metadata, as described *supra,* preserves the structure's type information and provides precise details about the offsets, lengths, and strides of the array elements, which further allows the compiler to generate efficient and accurate oracle codes for handling unknown addresses and non-constant values. As such, the second technique supports unknown accesses to the locations in Temp[], either by loads or stores.

**[[Conditional Select Operations]]**

FIG. 4(D) shows code 480 of conditional select operations. In addition to using conditional branches (e.g., if-else statements) for handling oracle conditions, the second technique may also supports the use of conditional select operations (e.g., csel instructions) when available in the target processor architecture. Conditional select operations provide an alternative way to implement oracle conditions without the need for explicit branching.

In the code of FIG. 4(D), the csel.eg instruction is used to conditionally select between the new value T and the existing value in the register (r0, r1, r2, or r3) based on the value of the index I. The ".eg" suffix indicates an "equal to" condition, meaning that the new value T is selected if I is equal to the specified constant (0, 1, 2, or 3), otherwise the existing value in the register is retained.

Using conditional select operations has several advantages over conditional branches such as reduced branching overhead, improved instruction-level parallelism, and simplified code generation.

The second technique supports both conditional branches and conditional select operations, providing flexibility to choose the most appropriate approach based on the specific requirements and characteristics of the code being optimized.

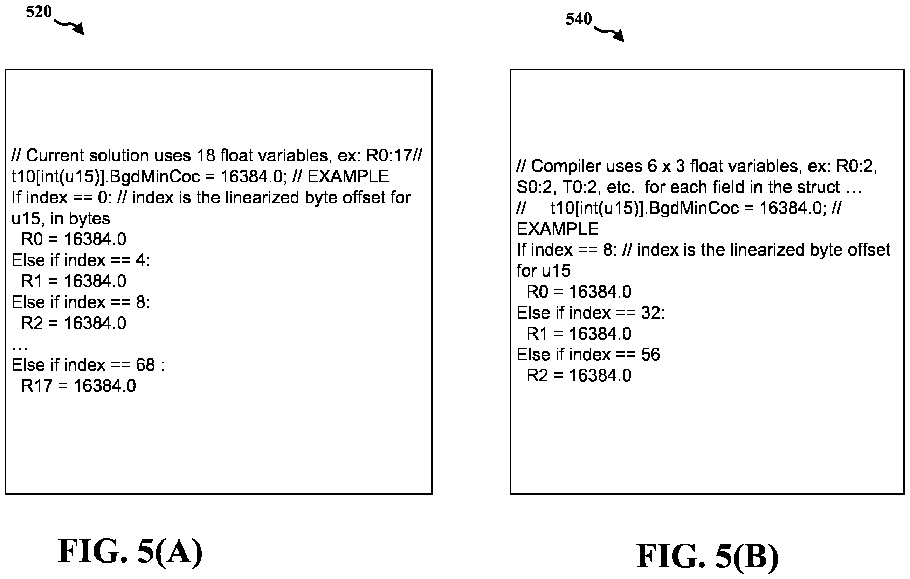

FIG. 5(A) shows code 520 for register promotion in the first technique. The code utilizes the struct in FIG. 3(A). The first technique described *supra* for handling stores to unknown locations in arrays of structures has limitations due to the loss of structure information during the compilation process. When the compiler operates on a flattened memory representation, it treats the array as a series of elementary values, disregarding the structure's type information. This leads to the generation of inefficient code with a large number of conditional statements to cover all possible byte offsets within the array.

In the code shown in FIG. 5(A), t10[int(u15)].BgdMinCoc = 16384.0, where t10 is an array of structures and BgdMinCoc is a field within the structure. The first technique generates code that uses 18 float variables (e.g., R0 to R17) to handle all possible byte offsets for the index u15. This approach does not take advantage of the structure's type information and generates unnecessary conditional statements.

FIG. 5(B) shows code 540 for register promotion in the second technique. The code utilizes the struct in FIG. 3(A). The second technique uses access vector metadata to generate more efficient code. By preserving the structure's type information through the access vector metadata, the compiler can detect which field of the structure is accessed by each store or load operation. This allows the compiler to tune the conditions precisely, reducing the number of oracle conditions from 18 to just 3 for the given store operation.

The access vector metadata provides the necessary information about the field offsets, array length, and structure size, enabling the compiler to generate optimized code. In this example, the compiler uses only three float variables (R0, R1, and R2) to handle the store operation, corresponding to the three possible offsets for the BgdMinCoc field in the structure. The access vector metadata provides the necessary information about the field offset (8), array length (3), and structure stride (24) to generate these precise oracle conditions.

By using the access vector metadata, the proposed solution reduces the number of oracle conditions from 18 to 3 for this particular store operation, resulting in more efficient code generation. This approach demonstrates the benefits of preserving and utilizing the structure's type information during the compilation process, enabling more effective optimizations for complex data types like arrays of structures.

**FIG 6**

The first technique for register promotion described *supra* has several limitations when it comes to handling arbitrary control flow and multiple stores to the same location. These limitations arise from the fact that the first technique assumes a simplified control flow structure and performs the transformation based on certain restrictions.

One of the main limitations is that the first technique expects stores to be done only once, while loads can be done multiple times. This assumption simplifies the condition-based scalar promotion process, as it eliminates the need to consider the control flow effects resulting from multiple writes to the same location. When the store address is known and the store operation is performed only once, the first technique can easily convert the store instruction to an oracle condition at a particular site in the code.

However, this limitation becomes problematic when dealing with more complex control flow structures and multiple stores to the same location. Consider the following code snippet:

```
t832[i388 + 1] = x; // variable x


while(...) {
  if(...) {
    t832[i388 + 1] += t382[i388];
  }
}
```

In this example, the first technique struggles to handle the store operation t832[i388 + 1] = x; because it involves storing a variable value (x) to a variable location (t832[i388 + 1]). Additionally, there is a possibility of multiple stores to the same location within the loop, as evident from the statement t832[i388 + 1] += t382[i388];.

To handle such cases, the compiler needs to perform data flow analysis to determine how the value of x can propagate and which addresses it can be stored to. This analysis becomes more complex when considering multiple stores and different control flow paths. For example, there might be another variable y being stored to an unknown location, and the values of x and y could be stored in different orders depending on the control flow path taken.

The first technique does not perform this necessary data flow analysis, which limits its ability to handle arbitrary control flow and multiple stores to the same location. As a result, it can only handle simpler cases where stores are done once, and the control flow is limited to certain types of structures.

To overcome these limitations, a more advanced solution is needed that can handle arbitrary control flow and perform data flow analysis to determine the propagation of values across multiple stores and different control flow paths. Such a solution would enable more comprehensive register promotion optimizations, leading to improved performance and reduced memory access overhead in GPU workloads.

**[[SSA Algorithm with Access Vector for Scalarization]]**

The second technique introduces a Static Single Assignment (SSA) algorithm to support scalarization in the presence of arbitrary control flow. This algorithm leverages the access vector type information provided by the compiler's front-end to generate a precise number of oracle conditions, enabling efficient scalarization despite complex control flow structures.

SSA is an intermediate representation used in compilers, where each variable is assigned only once, and every variable is defined before it is used. This property makes SSA particularly suitable for various compiler optimizations, including scalarization. By using SSA form, the compiler can easily track the definitions and uses of variables, simplifying the process of converting memory accesses to register accesses.

The SSA-based scalarization algorithm utilizes the access vector metadata to generate precise oracle conditions. The access vector metadata, as described earlier, provides information about the field offsets, array lengths, and structure sizes, allowing the compiler to accurately determine the register locations accessed by each load and store operation.

The SSA-based scalarization algorithm has ability to handle arbitrary control flow while leveraging the access vector information. Traditional scalarization techniques often struggle with complex control flow structures, such as loops and conditional statements, due to the difficulty in tracking the flow of data across different paths. However, by combining the SSA form with the access vector metadata, the proposed algorithm can effectively handle scalarization in the presence of arbitrary control flow.

The algorithm works by first converting the program into SSA form, ensuring that each variable has a single definition. Then, it uses the access vector metadata to identify the register locations accessed by each load and store operation. With this information, the algorithm can generate precise oracle conditions for each memory access, taking into account the specific field offsets, array lengths, and structure sizes.

The oracle conditions are generated based on the SSA form and the access vector metadata. For each load or store operation, the algorithm creates a set of conditional statements that determine which register to use based on the value of the access vector. These conditions are precise because they take into account the exact register locations accessed by each operation, as determined by the access vector metadata.

Once the oracle conditions are generated, the algorithm performs data flow analysis to propagate the values across different control flow paths. This analysis takes into account the SSA form; the values are correctly tracked and propagated based on the single assignment property. The data flow analysis also considers the oracle conditions; the correct registers are used for each memory access based on the specific conditions determined by the access vector metadata.

By combining the SSA form, access vector metadata, and data flow analysis, the proposed algorithm can effectively handle scalarization in the presence of arbitrary control flow. This approach allows for more precise and efficient scalarization compared to traditional techniques, as it takes into account the specific register locations accessed by each operation and propagates the values correctly across different control flow paths.

In an example with an array of structures each containing multiple fields, the SSA and access vector metadata can be applied as follows:

## Original Code Snippet

```
struct MyStruct {
    float a;
    float b;
    float c;
};
MyStruct arr[10];

for (int i = 0; i < 10; ++i) {
    arr[i].b = someFunction(i);
}
```

In the second technique, the compiler determines the access vector for the field 'b' in the structure 'MyStruct'. Assuming the offsets for 'a', 'b', and 'c' are 0, 4, and 8 respectively, and each float occupies 4 bytes, the access vector for 'b' would be (4, 10, 12) where 4 is the offset, 10 is the length (number of structures), and 12 is the stride (size of each structure).

In SSA form, the loop can be transformed such that each variable is assigned exactly once:

```
// SSA form with Access Vector Metadata
float* base_ptr = &arr[0].b; // Base pointer to the first 'b'
for (int i = 0; i < 10; ++i) {
    float* ptr = base_ptr + (i * 12); // Calculate pointer using stride

    *ptr = someFunction(i); // Directly use the pointer for assignment
}
```

Here, the pointer calculation uses the stride from the access vector, and the assignment to each location is done exactly once per loop iteration, adhering to the SSA form. This transformation allows the compiler to optimize the memory access patterns more effectively by reducing the overhead of accessing individual fields through the structure and potentially enhancing the usage of registers.

**[[Uniform vs. Varying Variables and Divergent Control Flow]]**

In GPU programming using the SIMT (Single Instruction, Multiple Threads) model, a shader program is executed by multiple threads concurrently. Each thread may have different values for certain variables, leading to different execution paths and potentially divergent control flow.
Variables in a shader program can be classified as either uniform or varying. Uniform variables contain the same value across all threads executing the shader, even if the value is not known at compile time. On the other hand, varying variables may contain different values for different threads, leading to divergent behavior.
Branches in the shader code that depend on uniform variables are called uniform branches. In such cases, all threads will take the same execution path, either taking the branch or not. This allows for efficient execution, as all threads can execute in

lockstep without any divergence.

However, branches that depend on varying variables are called divergent branches. In these cases, some threads may take the branch while others may not, leading to divergent control flow. Divergent control flow can impact performance, as threads that take different paths must be executed separately, potentially leading to

underutilization of GPU resources.

An example is shown below:

```
float temp[4];

// temp[i] = T
If (I == 0)
 r0 = T;
Else if (I == 1)
 r1 = T;
Else if (I == 2)
 r2 = T;
Else if (I == 3)
 r3 = T;
Endif
```

In this code, if the index variable I is known to be uniform across all threads, the compiler can generate code using conditional branches. This is because all threads will take the same control flow path, and the branch predictor can efficiently predict the outcome of the branches. In this case, the generated code will be more efficient as it avoids executing unnecessary instructions.
If the variable I takes on different values (0, 1, 2, or 3) for different threads, it is considered a varying variable. Each thread may take a different branch based on its value of I, leading to divergent control flow. In such cases, the GPU must execute each branch separately, potentially leading to performance degradation.
To mitigate the impact of divergent control flow, the second technique uses conditional select statements instead of branches. Conditional select statements allow for executing all possible paths and selecting the appropriate result based on a condition.

An example is shown below:

```
float temp[4];
// temp[i] = T
r0 = csel.eg I, 0, T, r0;
r1 = csel.eg I, 1, T, r1;
r2 = csel.eg I, 2, T, r2;
r3 = csel.eg I, 3, T, r3;
```

In this code, the csel.eg instruction is used to conditionally select the value of T based on the value of I. If I is equal to the specified constant (0, 1, 2, or 3), the corresponding register (r0, r1, r2, or r3) is updated with the value of T. This approach avoids divergent control flow, as all threads execute the same instructions, and the appropriate result is selected based on the condition.

The process of converting control flow statements (e.g., if-else) to data flow statements (e.g., conditional selects) is known as if-conversion. If-conversion is a compiler transformation that helps in reducing the impact of divergent control flow in GPU programs.

By analyzing the nature of variables (uniform or varying) and the control flow structure, compilers can make informed decisions about code generation. For uniform branches, traditional branch instructions can be used efficiently. However, for divergent branches, techniques like if-conversion and the use of conditional select statements are preferred to minimize the impact of divergence and improve overall performance.

**[[Divide and Conquer Strategy for Uniform Variables]]**

In the second technique, the compiler can generate more efficient code by using a divide and conquer strategy when the index variable is known to be uniform across all threads. This strategy involves splitting the range of possible index values into smaller subranges and recursively checking each subrange to determine the appropriate register to use.

An example is shown below:

```
float temp[4];

// temp[i] = T
If (I == 0)
 r0 = T;
Else if (I == 1)
 r1 = T;
Else if (I == 2)
 r2 = T;
Else if (I == 3)
 r3 = T;
Endif
```

In this code, the index variable I is used to determine which register (r0, r1, r2, or r3) should be assigned the value of T. If I is known to be uniform across all threads, meaning that all threads will have the same value for I, the compiler can optimize the code using a divide and conquer approach.

The divide and conquer strategy works by splitting the range of possible index values into smaller subranges and recursively checking each subrange. For example, the compiler can generate the following code:

```
float temp[4];
// temp[i] = T
If (I < 2):
 If I< 1:
  r0 = T;
 Else:
   r1 = T;
Else:
 if I < 3:
   r2 = T;
 else:
   r3 = T
```

In this optimized code, the compiler first checks if I is less than 2. If it is, the code enters the first branch and further checks if I is less than 1. If I is less than 1, r0 is assigned the value of T; otherwise, r1 is assigned the value of T. If I is greater than or equal to 2, the code enters the second branch and checks if I is less than 3. If I is less than 3, r2 is assigned the value of T; otherwise, r3 is assigned the value of T.

The divide and conquer approach reduces the number of comparisons needed to determine the appropriate register. In the original code, if I is 3, the code needs to perform four comparisons (I == 0, I == 1, I == 2, and I == 3) before assigning the value of T to r3. In the optimized code, only two comparisons are needed (I < 2 and I < 3) to assign the value of T to r3.

The divide and conquer strategy is beneficial when the index variable is known to be uniform across all threads. If the index variable is varying, meaning that different threads may have different values for the index variable, the divide and conquer approach may not provide any performance benefit. In such cases, the compiler may generate code that executes all branches, and threads with different index values may take different paths, leading to divergent control flow and potential performance degradation.

Therefore, the second technique determines whether the index variable is uniform or varying to make informed decisions about code generation. When the index variable is uniform, the divide and conquer strategy can be used to optimize the code and reduce the number of comparisons needed. However, when the index variable is varying, the compiler may choose to generate code that executes all branches to handle the divergent control flow.

**[[Divide and Conquer Strategy for Multi-Dimensional Arrays]]**

The second technique can be extended to handle multi-dimensional arrays efficiently by leveraging the divide and conquer strategy along with the analysis of uniform and varying variables. This approach is particularly useful when dealing with expensive memory accesses, such as in low-power GPUs where cache memory is limited, and each load operation may take a significant number of cycles.

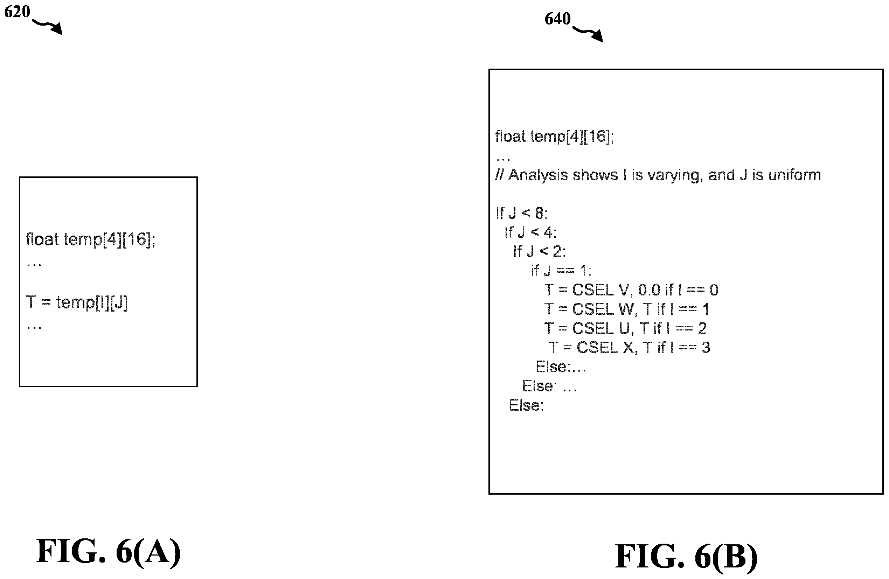

FIG. 6(A) shows exemplary code 620 of a two-dimensional array. In this code, temp is a two-dimensional array, and the values of I and J are used to access an element of the array. If the analysis shows that I is a varying variable and J is a uniform variable, the second technique can generate efficient code using a combination of the divide and conquer strategy and conditional select (CSEL) instructions.

FIG. 6(B) shows exemplary generated code 640. In the generated code, V, W, U, and X represent the elements at temp[0][0], temp[1][0], temp[2][0], and temp[3][0], respectively.

The divide and conquer strategy is applied to the uniform variable J, recursively dividing the range of possible values and generating nested conditional statements. This approach reduces the number of comparisons needed to determine the appropriate row of the two-dimensional array.

For the varying variable I, conditional select (CSEL) instructions are used to handle the divergent control flow. The CSEL instructions select the appropriate element (V, W, U, or X) based on the value of I for each thread. This avoids the need for explicit branching and minimizes the impact of divergent control flow on performance.

To generate this efficient code, the second technique relies on several components:

1. Front-end metadata derived from types: The compiler's front-end provides metadata about the types and dimensions of the arrays, which is used to guide the code generation process.
2. Uniform variable analysis: The technique uses uniform variable analysis algorithms, such as those available in the LLVM compiler infrastructure, to determine which variables are uniform across all threads.
3. Induction variable analysis and scalar evolution analysis: These analyses help in identifying and optimizing loop-related variables and expressions, enabling more precise code generation.

By combining these components, the second technique can generate efficient code that minimizes the cost of each scalarized operation (load or store) by using the divide and conquer strategy for uniform variables and conditional select instructions for varying variables.

This technique is particularly beneficial for multi-dimensional arrays, where one dynamic index is uniform across threads, and the other is divergent. The divide and conquer strategy can be applied to the uniform index, while the divergent index is handled using conditional select instructions.

Furthermore, this technique is highly applicable in scenarios where memory accesses are expensive, such as in low-power GPUs with limited cache memory. In such cases, a nest of branches generated by the divide and conquer strategy may be cheaper than accessing the stack memory directly, leading to improved performance and reduced energy consumption.

**[[Summary]]**

As described *supra,* certain features of the second technique are:

1. Efficient support for different kinds of aggregates, such as arrays of structures and multidimensional arrays in stack memory and internal constant buffers. The second technique uses "access vector metadata," which preserves the structure's type information in the compiler's intermediate representation. This metadata consists of a three-tuple per dimension of an array: (Offset, Length, Stride). By maintaining this information, the compiler can generate precise conditions for advanced data types, resulting in more efficient code.

2. Precise handling of nested aggregate data types. The access vector metadata allow the compiler to handle nested data structures effectively, as it retains the necessary information about field offsets, array lengths, and structure sizes. This enables the compiler to generate optimized code for complex data types, reducing the number of unnecessary conditional statements.

3. Support for multiple stores and loads. The second technique uses an SSA-based algorithm that supports any control flow. The SSA algorithm, combined with the access vector metadata, enables the compiler to handle multiple stores and loads efficiently. It performs data flow analysis to propagate the values correctly across different control flow paths.

4. Support for multi-dimensional arrays and utilization of uniformity behavior. The second technique extends the access vector metadata to handle multi-dimensional arrays naturally. It also leverages the analysis of uniform and varying variables in GPU workloads to generate efficient code. When the index variable is known to be uniform across all threads, the compiler can apply a divide-and-conquer strategy to reduce the number of comparisons needed. For varying variables, the compiler generates code using conditional select instructions to minimize the impact of divergent control flow.

5. Shader, hardware, and graphics API agnostic solution. The second technique are generic and applicable to various GPU workloads, regardless of the specific shader type (compute, vertex, fragment), hardware architecture (as long as it supports conditional select instructions), or graphics API (OpenGL, DirectX, Vulkan, Metal).

**[[Two-Stage]]**

The second technique may include two main stages:

Stage 1: Metadata insertion procedure in the compiler's front-end
Stage 2: Generation of oracle conditions on the compiler's middle-end intermediate representation

In the first stage, the metadata are inserted into the compiler's front-end. This metadata insertion procedure may be performed on the Abstract Syntax Tree (AST) or an equivalent high-level Intermediate Representation (IR). One example of such an IR is the SPIR-V intermediate representation, which is commonly used for representing Vulkan shaders in the compiler.

The metadata inserted in this stage provides information about the structure and layout of the data types, such as arrays of structures and multi-dimensional arrays. This metadata, referred to as "access vector metadata," may include a three-tuple per dimension of an array: (Offset, Length, Stride). The access vector metadata preserves the structure's type information in the compiler's intermediate representation. By maintaining this information, the compiler can generate precise conditions for advanced data types in the later stages of the invention.

**[[Stage 2: Generation of Oracle Conditions]]**

The second stage of the second technique involves generating oracle conditions on the compiler's middle-end intermediate representation. This stage utilizes the metadata inserted in Stage 1 to generate efficient and precise oracle conditions for handling multiple stores and loads.

The oracle conditions may be generated using an SSA-based algorithm that supports arbitrary control flow. By combining the SSA form with the access vector metadata, the algorithm can effectively handle scalarization in the presence of complex control flow structures.

The SSA-based algorithm performs data flow analysis to propagate the values correctly across different control flow paths. It takes into account the access vector metadata to generate precise oracle conditions for each memory access. These oracle conditions determine which register to use based on the specific register location being accessed, as determined by the access vector metadata.

The generation of oracle conditions in Stage 2 is performed on the compiler's middle-end intermediate representation, such as LLVM IR. LLVM is a widely used compiler infrastructure that provides a powerful and flexible intermediate representation for optimization and code generation.

**[[Stage 1: Metadata Insertion in the Compiler's Front-End]]**

Stage 1 of the second technique involves inserting metadata into the compiler's front-end. This metadata insertion procedure is performed on the Abstract Syntax Tree (AST) or an equivalent high-level Intermediate Representation (IR). One example of such an IR is the SPIR-V intermediate representation, which is commonly used for representing Vulkan shaders in the compiler.

One example using OpenGL and SPIR-V is shown below:
OpenGL code for a store operation:

$$t10[int(u12)].BgdMinCoc = 16384.0;$$

SPIR-V intermediate form for this store operation in the front-end:

$$\%77 = OpLoad~\%uint~\%u12$$

$$\%78 = OpBitcast~\%int~\%77$$

$$\%80 = OpAccessChain~\%\_ptr\_Function\_float~\%t10~\%78~\%int\_2$$

$$OpStore~\%80~\%float\_16384$$

In the SPIR-V representation, the array access is represented using the OpAccessChain operation (%80 in the example). The data type is %_ptr_Function_float, the constant offset is %int_2 (just the number 2), and the array index is dynamic and held in %78, which corresponds to u12 in the OpenGL code.

From the data type held in the compiler's symbol table and the constant offset, the compiler can fully obtain the access vector metadata (offset, stride, and array length). The result of Stage 1 is an intermediate form instruction with access vector metadata:

$$\%106 = store~align(4)~<1~x~f32>~\%105, \%102, access\_vector(8, 3, 24)$$

In this example, 8 is the offset, 3 is the length, and 24 is the stride. The value %105 is stored at address %102. The sequence of addresses that correspond to an access vector metadata is calculated as:

$$Array\_Base\_Pointer + Offset + l \times Stride, \text{ by taking } l \text{ from } [0, Length)$$

For the above example, the integers being added to the array's pointer are:

$$8 + 0 \times 24, 8 + 1 \times 24, 8 + 2 \times 24$$

These correspond to the following legal addresses possible for the store operation:

$$8 + Base, 32 + Base, 56$$

+ Base, where Base is the starting address of the array

As such, from every load/store operation with access vector metadata, the compiler can obtain the complete set of addresses that are possible at runtime during compile time.

The process of obtaining the access vector metadata involves walking the values in the OpAccessChain instruction to find the structure and extracting the necessary information. The SPIR-V representation provides the structure type information, the dynamic index, and the constant offset directly. By examining these values, the compiler can compute the access vector (e.g., access_vector(8, 3, 24)) based on the data type of t10 (which gives the length), the dynamic index %78 (indicating a dynamic access), and the constant offset %int_2 (specifying the field offset).

By attaching the metadata to the instructions themselves, the necessary information is readily available for subsequent stages of the compilation process, enabling more efficient and precise code generation.

While the example shown here uses the SPIR-V intermediate representation, the same idea applies to other front-end representations, such as abstract syntax trees used in compilers like Clang or ARM. The specific method for calculating the access vector may vary depending on the format of the intermediate representation, but the overall concept remains the same: examining the data types, offsets, and constants to determine the access vector metadata.

**[[Symbol Table and Access Vector Metadata]]**

The symbol table in a compiler is a data structure that stores information about the identifiers used in a program, such as variable names, function names, and data types. In one example, the below code defines a structure named 'myStruct' with two float fields, 'Max' and 'Min'. An array named 't10' has three elements of type 'myStruct'.

```
struct myStruct {
   float Max;
   float Min;
} t10[3];
```

Table 1 is a symbol table containing information about the myStruct data type and the t10 array.

*Table 1 - Symbol table representation of the t10 array*

| Array-access and field name | Array-index | Field-offset | Location in bytes from start of array |
|---|---|---|---|
| t10[0].Max | 0 | 0 | 0 |
| t10[0].Min | 0 | 1 | 4 |
| t10[1].Max | 1 | 0 | 8 |
| t10[1].Min | 1 | 1 | 12 |
| t10[2].Max | 2 | 0 | 16 |
| t10[2].Min | 2 | 1 | 20 |

Each row in the table represents a specific element of the t10 array, identified by its array index and field name. The field offset indicates the position of the field within the myStruct data type, and the location in bytes from the start of the array shows the actual memory address of the element relative to the beginning of the array.
To access a field of any array element at index x, the following formula can be used:

$$x * sizeof(myStruct) + field\_offset\_in\_bytes$$

For example, to access t10[2].Max, the formula would be:

$$2 * 8 + 4$$

Here, sizeof(myStruct) is 8 bytes (assuming 4 bytes for each float), and the field_offset_in_bytes for Max is 4.
The access vector metadata, as described *supra,* is added by the compiler's front-end to each load and store operation. It contains three components: Offset, Stride, and Length. Offset corresponds to the field_offset within the struct. Stride corresponds to the sizeof(myStruct). Length is the total length of the array.
This access vector metadata is not limited to one-dimensional arrays; it also extends to multidimensional arrays. By providing this metadata, the compiler can generate more efficient code for accessing array elements and perform optimizations such as register promotion, even in the presence of complex data structures like arrays of structs.

**[[Oracle Insertion Phase]]**

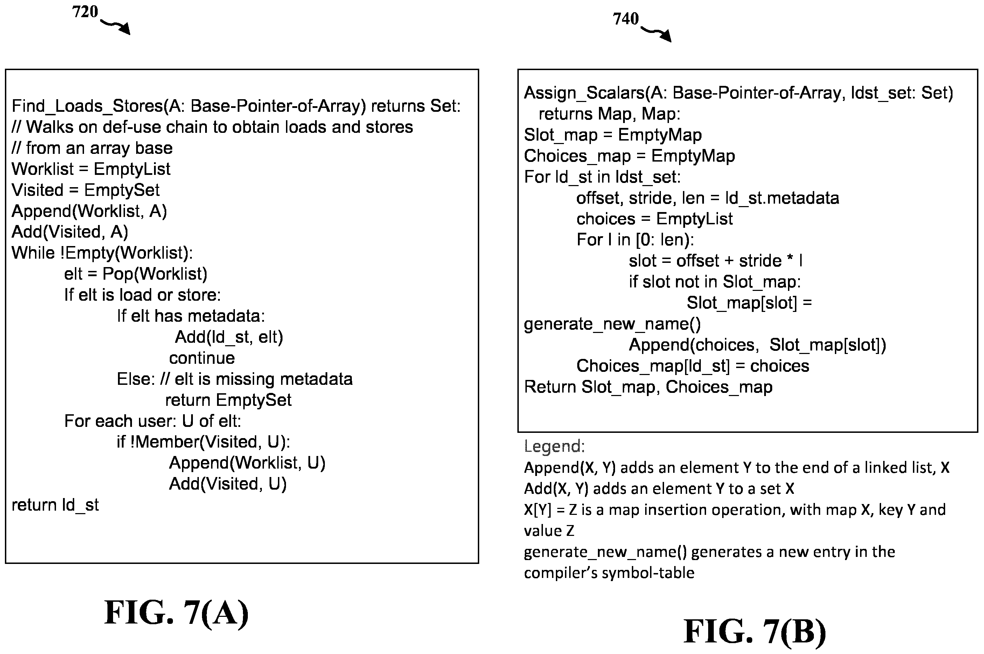

FIGs. 7(A) and (B) show exemplary code of an oracle insertion phase of the second technique. The oracle insertion phase in the second technique consists of two main algorithms that are applied sequentially: Algorithm-1 and Algorithm-2. These algorithms work together to collect load and store operations for each array and assign scalars to each address accessed using the access vector metadata.

**Algorithm-1: Collect Load and Stores of Each Array**

Algorithm-1 is responsible for collecting load and store operations that refer to each array under test. It takes the base address of an array (which is an offset to the stack pointer) as input and uses a def-use chain walker to find all the loads and stores that access the array.
FIG. 7(A) shows exemplary code 720 illustrating Algorithm-1. The algorithm maintains a worklist and a visited set, both initially empty. It starts by appending the base pointer of the array (A) to the worklist and adding it to the visited set.

Then, it enters a loop that continues until the worklist is empty.

In each iteration, the algorithm pops an element (elt) from the worklist. If the element is a load or store operation, it checks if the operation has metadata associated with it. If the metadata is present, the load or store operation is added to the set of collected operations (ld_st). If the metadata is missing, the algorithm returns an empty set, indicating that the optimization cannot be performed for this array.

If the element is not a load or store operation, the algorithm iterates over each user (U) of the element. For each user that is not already in the visited set, the algorithm appends it to the worklist and adds it to the visited set.

Finally, the algorithm returns the set of collected load and store operations (ld_st) for the given array.

**Algorithm-2: Create Scalars for Each Load/Store Slot in the Array**

Algorithm-2 is executed immediately after Algorithm-1. Its purpose is to assign scalars to each address that is potentially accessed by the load and store operations collected in Algorithm-1. It uses the access vector metadata to determine the number of scalars needed and their corresponding addresses.

FIG. 7(B) shows exemplary code 740 illustrating Algorithm-2. The algorithm takes the base pointer of the array (A) and the set of collected load and store operations (ldst set) as input. It returns two maps: Slot_map and Choices_map. A "slot" refers to a specific register location within the array that corresponds to a particular field of the structure at a given index. Each slot is identified by its offset from the start of the array and is assigned a unique scalar name (*e.g.,* A1, A2, etc.).

For each load or store operation (ld_st) in the ldst_set, the algorithm extracts the offset, stride, and length from the operation's metadata. It then initializes an empty list called choices.

The algorithm iterates over the range [0, len), where len is the length obtained from the metadata. For each index I in this range, it calculates the slot by adding the offset to the product of stride and I. If the slot is not already present in the Slot_map, the algorithm generates a new name for the scalar using the generate_new_name() function and adds it to the Slot_map with the slot as the key.

The newly generated scalar name is appended to the choices list for the current load or store operation. After processing all the indices, the choices list is added to the Choices_map with the load or store operation (ld_st) as the key.

Finally, the algorithm returns the Slot_map and Choices_map. The Slot_map contains the mapping between each slot and its corresponding scalar name, while the Choices_map contains the list of scalar names that each load or store operation can potentially access.

These two algorithms work together to collect the necessary information for performing oracle insertion. Algorithm-1 identifies the relevant load and store operations for each array, while Algorithm-2 determines the scalars needed for each address accessed by those operations. This information is then used in subsequent steps of the oracle insertion process to generate efficient code for handling arrays of structures and other complex data types.

**[[Example of Assigning Scalars to Array Elements]]**

To illustrate how the second technique assigns scalars to each "slot" in the array based on the access vector metadata, consider the following example:

```
struct myStruct {
   float Max;
   float Min;
} t10[3];
```

In this example, myStruct is a structure containing two float fields, Max and Min, and 110 is an array of three elements of type myStruct.

Further, the structure in a particular array of structures used to store t[10] may have a different size from the size of myStruct. For example, the structure in the particular array may have a size of 12 bytes and contains 3 slots or scalars. The length of the particular array is 2.

Table 2 shows the assigned scalar names, corresponding array elements, and their locations in bytes from the start of the array.

| Assigned scalar names and their corresponding array elements | | |
| --- | --- | --- |
| Scalar name | Array element | Location in bytes from start of array |
| A1 (group 1) | t10[0].Max | 0 |
| A2 (group 2) | t10[0].Min | 4 |
| A3 (group 3) | t10[1].Max | 8 |

(continued)

| Assigned scalar names and their corresponding array elements | | |
|---|---|---|
| Scalar name | Array element | Location in bytes from start of array |
| A4 (group 1) | t10[1].Min | 12 |
| A5 (group 2) | t10[2].Max | 16 |
| A6 (group 3) | t10[2].Min | 20 |

The scalar names A1 to A6 are assigned based on the access vector metadata for each load or store operation. The groups (group 1, group 2, group 3) represent different sets of oracle choices corresponding to specific offset, stride, and length values:

group 1: Offset = 0, Stride = 12, Length = 2
group 2: Offset = 4, Stride = 12, Length = 2
group 3: Offset = 8, Stride = 12, Length = 2

By applying the formula derived from the access vector metadata, the second technique determines the number of scalars required for the oracle-check for each load or store operation and the addresses they correspond to. This process filters the choices and reduces the set of elements to specific fields offset by a stride of 12, rather than considering all elements in the array.

The access vector metadata allows the compiler to generate more efficient code by focusing on the relevant fields and offsets, thereby reducing the number of oracle conditions needed for each load or store operation. This approach leads to more precise and optimized code generation for arrays of structures and other complex data types.

**[[Oracle Insertion Algorithm for Stores]]**

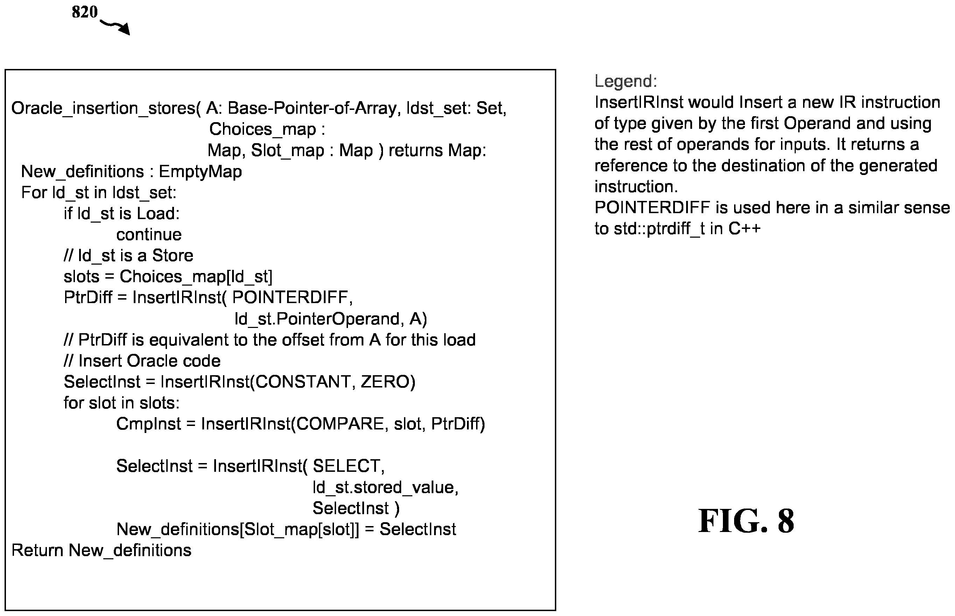

FIG. 8 shows exemplary code 820 of an oracle insertion algorithm for stores. The algorithm is responsible for generating the necessary oracle conditions and creating new SSA definitions for each store operation. This algorithm assists the second technique to optimize the handling of arrays of structures and other complex data types.

The algorithm takes four inputs:

A: The base pointer of the array being processed.
ldst_set: The set of load and store operations collected by Algorithm-1.
Choices_map: A map that associates each load or store operation with its possible choices (i.e., the scalar names corresponding to the addresses it may access).
Slot_map: A map that associates each slot (i.e., a specific register location within the array) with its corresponding scalar name.

The algorithm returns a map called New_definitions, which contains the new SSA definitions created for each store operation.

The algorithm iterates over each load or store operation (ld_st) in the ldst_set. If the operation is a load, it is skipped, as this algorithm focuses on handling stores. For each store operation, the algorithm retrieves the list of slots (slots) associated with that store from the Choices_map.

Next, the algorithm calculates the pointer difference (PtrDiff) between the store's pointer operand (ld_st.Pointer-Operand) and the base pointer of the array (A). This pointer difference represents the offset of the store operation from the start of the array. The InsertIRInst function is used to insert a new IR (Intermediate Representation) instruction of type POINTERDIFF, which calculates this offset.

The algorithm then initializes a SelectInst variable with a constant value of zero. This variable will be used to build the oracle condition for the store operation.

For each slot in the slots list, the algorithm performs the following steps:

1) It inserts a new IR instruction of type COMPARE to compare the current slot with the PtrDiff. This comparison determines whether the store operation is accessing the register location corresponding to the current slot.
2) It inserts a new IR instruction of type SELECT, which conditionally selects between the value being stored (ld_st.stored _value) and the current value of SelectInst, based on the result of the comparison. This step builds the oracle condition for the store operation.

3) It updates the SelectInst variable with the newly created SELECT instruction, effectively chaining the oracle conditions for each slot.

4) It adds a new entry to the New_definitions map, associating the scalar name corresponding to the current slot (Slot _map[slot]) with the updated SelectInst. This step creates a new SSA definition for the stored value at each relevant register location.

After processing all the slots for the current store operation, the algorithm moves on to the next store operation in the ldst_set.

Finally, the algorithm returns the New _definitions map, which contains the new SSA definitions created for each store operation. These new definitions represent the oracle conditions that determine which register locations are updated by each store, based on the pointer difference and the associated slots.

The oracle conditions generated by this algorithm are essentially conditional select instructions that choose between the new value being stored and the existing value at each relevant register location. By creating these oracle conditions and new SSA definitions, the algorithm enables the compiler to generate optimized code that efficiently handles stores to arrays of structures and other complex data types, even in the presence of unknown or dynamic access patterns.

The New_definitions map returned by this algorithm will be used in the subsequent step of handling load operations, where the appropriate SSA definitions will be selected based on the load's pointer operand and the associated slots. The correct values are read from memory, taking into account the updates made by the store operations.

As such, the oracle insertion algorithm for stores enables efficient and precise handling of complex data structures in the presence of unknown or dynamic access patterns.

**[[Oracle Insertion Algorithm for Loads]]**

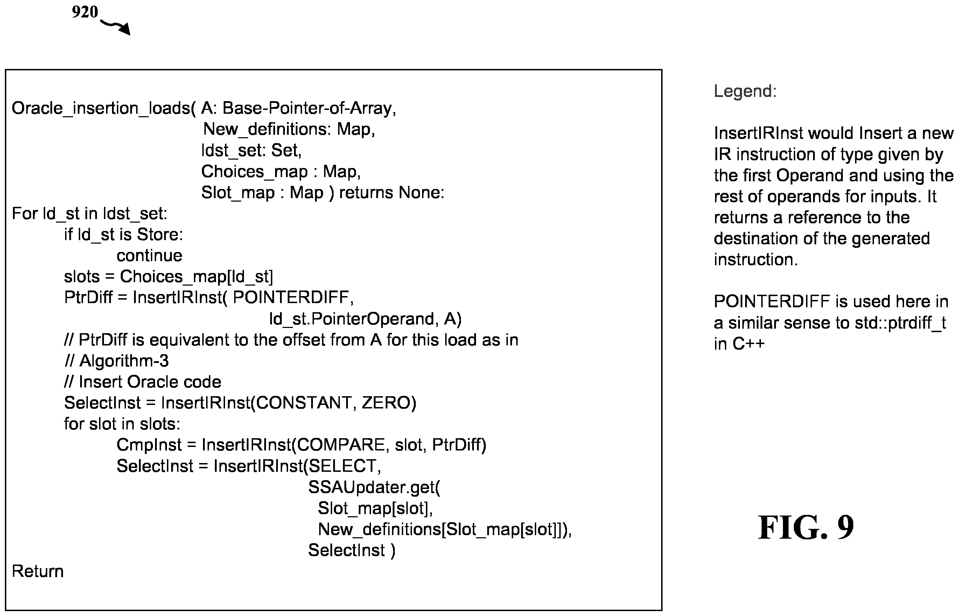

FIG. 9 shows exemplary code 820 of an oracle insertion algorithm for loads. This algorithm is responsible for generating the necessary oracle conditions to select the appropriate values for each load operation based on the SSA definitions created by the store algorithm. This algorithm enables efficient and precise handling of load operations in the presence of complex data structures and unknown or dynamic access patterns.

The algorithm takes five inputs:

A: The base pointer of the array being processed.

New_definitions: A map containing the new SSA definitions created by the store algorithm for each relevant register location.

ldst_set: The set of load and store operations collected by Algorithm-1.

Choices_map: A map that associates each load or store operation with its possible choices (i.e., the scalar names corresponding to the addresses it may access).

Slot_map: A map that associates each slot (i.e., a specific register location within the array) with its corresponding scalar name.

The algorithm iterates over each load or store operation (ld_st) in the ldst_set. If the operation is a store, it is skipped, as this algorithm focuses on handling loads. For each load operation, the algorithm retrieves the list of slots (slots) associated with that load from the Choices_map.

Next, the algorithm calculates the pointer difference (PtrDiff) between the load's pointer operand (ld_st.Pointer-Operand) and the base pointer of the array (A). This pointer difference represents the offset of the load operation from the start of the array. The InsertIRInst function is used to insert a new IR (Intermediate Representation) instruction of type POINTERDIFF, which calculates this offset.

The algorithm then initializes a SelectInst variable with a constant value of zero. This variable will be used to build the oracle condition for the load operation.

For each slot in the slots list, the algorithm performs the following steps:

1) It inserts a new IR instruction of type COMPARE to compare the current slot with the PtrDiff. This comparison determines whether the load operation is accessing the register location corresponding to the current slot.

2) It inserts a new IR instruction of type SELECT, which conditionally selects between the reaching definition of the current slot (SSAUpdater.get(Slot_map[slot], New_definitions[Slot_map[slot]])) and the current value of SelectInst, based on the result of the comparison. This step builds the oracle condition for the load operation.

3) It updates the SelectInst variable with the newly created SELECT instruction, effectively chaining the oracle conditions for each slot.

The reaching definition for each slot is obtained using the SSAUpdater.get function, which takes the scalar name of the slot (Slot map[slot]) and the corresponding new definition from the New_definitions map. This function is typically provided by the compiler's SSA updating API, such as the SSAUpdater in LLVM.

By using the SSAUpdater.get function, the correct value is selected for each load operation based on the most recent definition of the corresponding register location. This maintains the correctness of the program in the presence of multiple stores and complex control flow.

After processing all the slots for the current load operation, the algorithm moves on to the next load operation in the ldst_set.

The oracle conditions generated by this algorithm are essentially conditional select instructions that choose between the reaching definitions of the relevant register locations based on the pointer difference and the associated slots. As such, the correct values are loaded from memory, taking into account the updates made by the store operations.

By utilizing the SSA form and the access vector metadata, the algorithm can generate efficient and precise code for load operations, even in the presence of unknown or dynamic access patterns. The oracle insertion algorithm for loads, in combination with the store algorithm and the access vector metadata, enables the second technique to effectively optimize code involving arrays of structures and other complex data types.

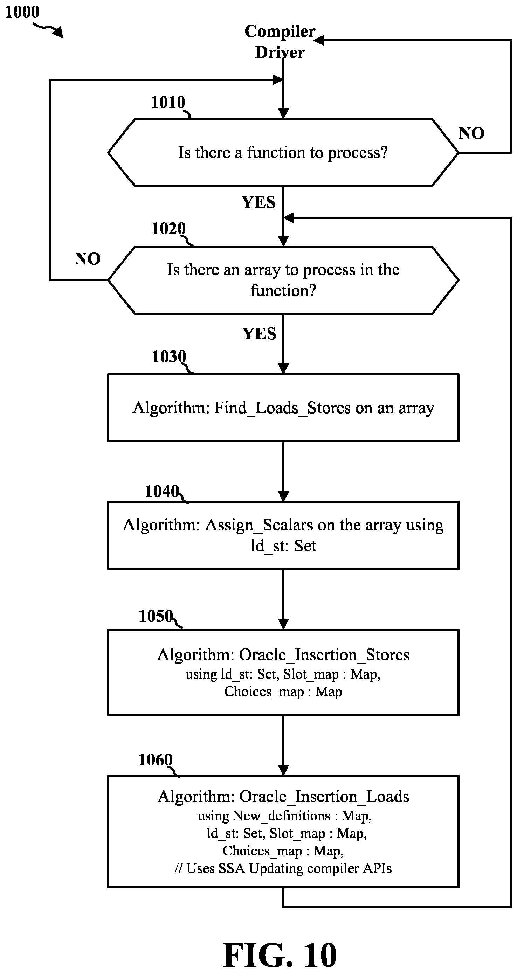

FIG. 10 is a flow chart 1000 illustrating the oracle insertion phase of the second technique. The oracle insertion phase consists of two main stages: collecting load and store operations for each array (Algorithm-1) and assigning scalars to each address accessed using the access vector metadata (Algorithm-2).

The flow chart begins with the compiler driver checking if there is a function to process (operation 1010). If there is a function to process, the driver checks if there is an array to process in the function (operation 1020).

If an array is found, the compiler applies Algorithm-1 (Find_Loads_Stores) to the array (operation 1030). Algorithm-1 walks through the def-use chain of the array pointer to locate all the loads and stores associated with the array. It returns a set of load and store operations (ldst_set) that access the array.

Next, the compiler applies Algorithm-2 (Assign_Scalars) to the array using the ldst_set obtained from Algorithm-1 (operation 1040). Algorithm-2 utilizes the access vector metadata to determine the number of scalars (slots) in the array and their corresponding addresses. It returns two maps: Slot_map, which maps each slot to its corresponding scalar name, and Choices_map, which maps each load or store operation to its possible choices (i.e., the scalar names corresponding to the addresses it may access).

After obtaining the Slot_map and Choices _map, the compiler performs oracle insertion for store operations using Algorithm-3 (Oracle_Insertion_Stores) (operation 1050). This algorithm generates the necessary oracle conditions and creates new SSA definitions for each store operation based on the ldst_set, Slot_map, and Choices_map. It returns a map called New_definitions, which contains the new SSA definitions created for each store operation.

Finally, the compiler performs oracle insertion for load operations using Algorithm-4 (Oracle _Insertion_Loads) (operation 1060). This algorithm generates the necessary oracle conditions to select the appropriate values for each load operation based on the New_definitions map, ldst_set, Slot_map, and Choices _map. It utilizes the SSA updating compiler APIs to obtain the reaching definitions for each load operation.

The oracle insertion phase enables efficient and precise handling of complex data structures, such as arrays of structures, in the presence of unknown or dynamic access patterns. By collecting load and store operations, assigning scalars to each accessed address, and generating oracle conditions, the second technique can optimize code involving these data structures and improve overall performance.

**[[Pseudo Code for Oracle Insertion]]**

The exemplary code snippets below demonstrate the pseudo code generated by the second technique for oracle insertion in the case of store and load operations. These code snippets illustrate how the access vector metadata is utilized to generate efficient and precise oracle conditions for handling complex data structures, such as arrays of structures.

More specifically, a set of load and store operations has a base array pointer %Base:

```
{
  store align(4) <1 x f32> %105, %102, access_vector (8, 3, 24);
  %106 = load align(4) %103, access_vector (8, 3, 24)
1
```

The access vector metadata for both the store and load operations is (8, 3, 24), where 8 represents the offset, 3 represents the length of the array, and 24 represents the stride (size of each array element).

For the store operation, the pseudo code with oracle conditions using the access vector metadata is as follows:

$$\text{if } \%102 == \%Base + 8 + (0 * 24):$$

$$v\_0 = \%105$$

$$\text{else if } \%102 == \%Base + 8 + (1 * 24):$$

$$v\_1 = \%105$$

$$\text{else if } \%102 == \%Base + 8 + (2 * 24):$$

$$v\_2 = \%105$$

In this code, the oracle conditions check the value of the pointer operand % 102 against the calculated addresses based on the access vector metadata. The base address %Base is added to the offset (8) and the product of the array index (0, 1, or 2) and the stride (24). If the pointer operand matches one of these calculated addresses, the corresponding scalar variable (v_0, v_1, or v_2) is assigned the value being stored (%105).

Similarly, for the load operation, the pseudo code with oracle conditions is as follows:

$$\text{if } \%103 == \%Base + 8 + (0 * 24):$$

$$\%106 = v\_0$$

$$\text{else if } \%103 == \%Base + 8 + (1 * 24):$$

$$\%106 = v\_1$$

$$\text{else if } \%102 == \%Base + 8 + (2 * 24):$$

$$\%106 = v\_2$$

In this code, the oracle conditions check the value of the pointer operand % 103 against the calculated addresses based on the access vector metadata, similar to the store operation. If the pointer operand matches one of these calculated addresses, the corresponding scalar variable (v_0, v_1, or v_2) is assigned to the destination operand %106.

**[[Divide and Conquer Strategy with Conditional Selects]]**

The second technique supports a divide and conquer strategy for generating efficient code when the index variable is known to be uniform across all threads. This strategy involves recursively dividing the range of possible index values into smaller subranges and generating nested conditional statements to determine the appropriate register to use.

An example of the generated code using the divide and conquer strategy is shown below:

```
if (idx >= 0 && idx < 8) {
    if (idx >= 0 && idx < 4) {
        if (idx >= 0 && idx < 2) {
            if (idx == 0) {
                v_0 = %105
            } else {
                v_1 = %105
            }
        } else {
            if (idx == 2) {
                v_2 = %105
            } else {
                v_3 = %105
            }
        }
    } else {
        if (idx >= 4 && idx < 6) {
            if (idx == 4) {
                ....
            }
        }
    }
}
```

In this code, the index variable idx is compared against progressively smaller ranges using nested conditional statements. The ranges are divided in half at each level of nesting, allowing for a more efficient determination of the appropriate register to use. For example, the code first checks if idx is less than 8. If it is, the code enters the first branch and further checks if idx is less than 4. If idx is less than 4, the code checks if it is less than 2. If idx is less than 2, it checks if idx is equal to 0, and if so, assigns %105 to v_0; otherwise, it assigns %105 to v_1. If idx is greater than or equal to 2 but less than 4, the code checks if idx is equal to 2, and if so, assigns %105 to v_2; otherwise, it assigns %105 to v_3. The code continues this divide and conquer approach for the remaining subranges.

However, if the index variable is known to be varying among threads, the second technique prefers to generate code using conditional select instructions instead of branches. This approach avoids divergent control flow; all threads execute the same instructions, improving performance on SIMT architectures.

An example of the generated code using conditional selects is shown below:

```
v_0 = idx == 0 ? %105 : v_0
v_1 = idx == 1 ? %105 : v_1
...
```

In this code, the conditional select instructions (?:) are used to assign the value %105 to the appropriate register (v_0, v_1, etc.) based on the value of the index variable idx. This approach allows for efficient execution on SIMT architectures, as all threads execute the same instructions, and the appropriate value is selected based on the index.

To determine whether to use the divide and conquer strategy with branches or the conditional select approach, the second technique relies on uniformity analysis. Uniformity analysis is a technique used in compilers, such as LLVM, to determine if a variable has the same value across all threads (uniform) or if it may have different values across threads (varying).

If the uniformity analysis determines that the index variable is uniform, the second technique deploys the divide and conquer strategy with branches. On the other hand, if the uniformity analysis determines that the index variable is varying among threads, the second technique generates code using conditional select instructions.

The divide and conquer strategy and the use of conditional selects are not limited to one-dimensional arrays. The second technique naturally extends these approaches to multi-dimensional arrays as well. By combining the divide and conquer strategy, conditional selects, and uniformity analysis, the second technique can generate efficient code for a wide range of array access patterns and data structures.

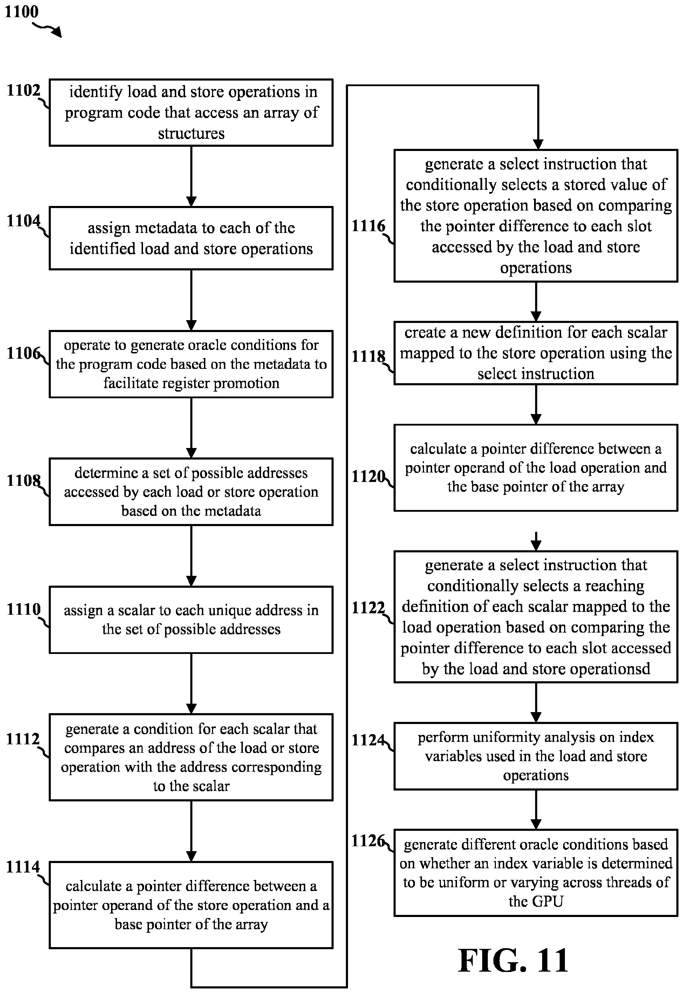

FIG. 11 is a flow chart 1100 of a method (process) for generating code for a graphics processing unit (GPU). The method may be performed by a compiler. In operation 1102, the compiler identifies load and store operations in program code that access an array of structures. In operation 1104, the compiler assigns metadata to each of the identified load and store operations. The metadata associated with each operation represents a structure of the array. In certain configurations, the metadata includes an offset indicating a field offset within the structure, a length indicating a dimension of the array, and a stride indicating a size of the structure.

In operation 1106, the compiler operates to generate oracle conditions for the program code based on the metadata to facilitate register promotion. One or more indices of the array accessed by the load and store operations are not known at compile time. In operation 1108, to generate the oracle conditions, the compiler determines a set of possible addresses accessed by each load or store operation based on the metadata. In operation 1110, the compiler assigns a scalar to each unique address in the set of possible addresses. In operation 1112, the compiler generates a condition for each scalar that compares an address of the load or store operation with the address corresponding to the scalar.

In certain configurations, the oracle conditions for store operations create new definitions for each scalar assigned to an address. The oracle conditions for load operations select a reaching definition for each scalar based on the new definitions created by the store operations.

In operation 1114, for each store operation, the compiler calculates a pointer difference between a pointer operand of the store operation and a base pointer of the array. In operation 1116, the compiler generates a select instruction that conditionally selects a stored value of the store operation based on comparing the pointer difference to each slot accessed by the load and store operations. In operation 1118, the compiler creates a new definition for each scalar mapped to the store operation using the select instruction.

In operation 1120, for each load operation, the compiler calculates a pointer difference between a pointer operand of the load operation and the base pointer of the array. In operation 1122, the compiler generates a select instruction that conditionally selects a reaching definition of each scalar mapped to the load operation based on comparing the pointer difference to each slot accessed by the load and store operations. The reaching definition is determined using the new definitions created for the store operations.

In operation 1124, the compiler performs uniformity analysis on index variables used in the load and store operations. In operation 1126, the compiler generates different oracle conditions based on whether an index variable is determined to be uniform or varying across threads of the GPU. In certain configurations, the oracle conditions for uniform index variables use a divide-and-conquer strategy to reduce a number of comparisons needed. The oracle conditions for varying index variables use conditional select instructions to avoid divergent control flow.

In certain configurations, the oracle conditions handle multiple non-constant stores and loads to the same location in the array. The oracle conditions are generated using a static single assignment (SSA) algorithm that supports scalarization amid control flow. In certain configurations, the metadata is added to an intermediate representation of the program code by a compiler front-end. The oracle conditions are generated on the intermediate representation. In certain configurations, the array of structures is a multi-dimensional array.

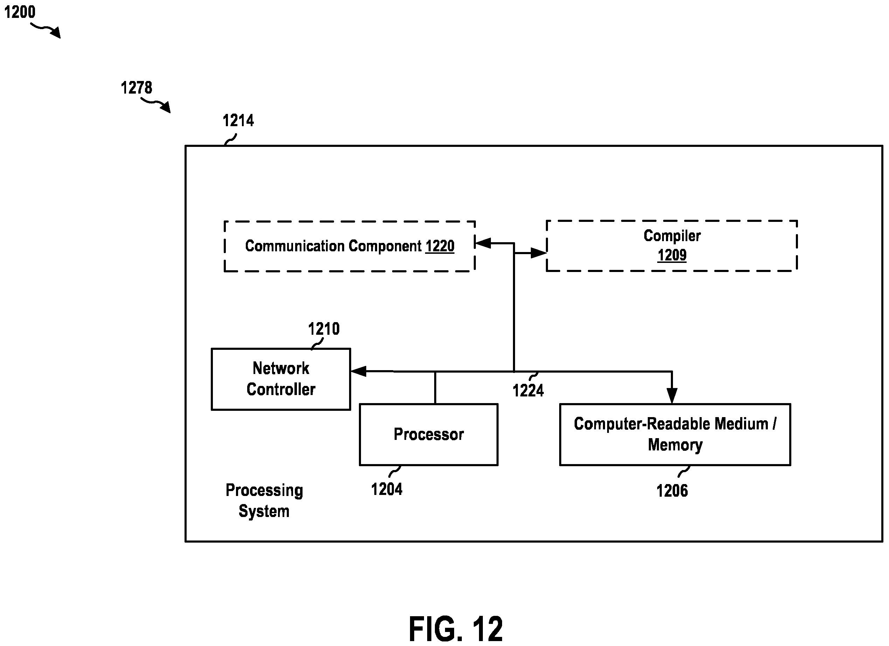

FIG. 12 is a diagram 1200 illustrating an example of a hardware implementation for an apparatus 1278 employing a processing system 1214. The apparatus 1278 may implement a complier 1209. The processing system 1214 may be implemented with a bus architecture, represented generally by the bus 1224. The bus 1224 may include any number of interconnecting buses and bridges depending on the specific application of the processing system 1214 and the overall design constraints. The bus 1224 links together various circuits including one or more processors and/or hardware components, represented by a processor 1204, a network controller 1210, and a computer-readable medium / memory 1206. The bus 1224 may also link various other circuits such as timing sources, peripherals, voltage regulators, and power management circuits, which are well known in the art, and therefore, will not be described any further.

The processing system 1214 may be coupled to the network controller 1210. The network controller 1210 provides a means for communicating with various other apparatus over a network. The network controller 1210 receives a signal from the network, extracts information from the received signal, and provides the extracted information to the processing system 1214, specifically a communication component 1220 of the apparatus 1278. In addition, the network controller 1210 receives information from the processing system 1214, specifically the communication component 1220, and based on the received information, generates a signal to be sent to the network. The processing system 1214 includes a processor 1204 coupled to a computer-readable medium / memory 1206. The processor 1204 is responsible for general processing, including the execution of software stored on the computer-readable medium / memory 1206. The software, when executed by the processor 1204, causes the processing system 1214 to perform the various functions described supra for any particular apparatus. The computer-readable medium / memory 1206 may also be used for storing data that is manipulated by the processor 1204 when executing software. The processing system further includes the complier 1209. The components may be software components running in the processor 1204, resident/stored in the computer readable medium / memory 1206, one or more hardware components coupled to the processor 1204, or some combination thereof.

The apparatus 1278 may include means for performing operations as described *supra* referring to FIG. 11. The aforementioned means may be one or more of the aforementioned components of the apparatus 1278 and/or the processing system 1214 of the apparatus 1278 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for".

**Claims**

1. A method of generating code for a graphics processing unit, in the following also referred to as GPU, the method comprising:

    identifying load and store operations in program code that access an array of structures (1102);
    assigning metadata to each of the identified load and store operations (1104), the metadata associated with each operation representing a structure of the array; and
    generating oracle conditions for the program code based on the metadata to facilitate register promotion (1106), wherein one or more indices of the array accessed by the load and store operations are not known at compile time.

2. The method of claim 1, wherein the metadata includes:

    an offset indicating a field offset within the structure;
    a length indicating a dimension of the array; and
    a stride indicating a size of the structure.

3. The method of claim 1 or 2, wherein generating the oracle conditions comprises:

determining a set of possible addresses accessed by each load or store operation based on the metadata (1108);
assigning a scalar to each unique address in the set of possible addresses (1110); and
generating a condition for each scalar that compares an address of the load or store operation with the address corresponding to the scalar (1112).

4. The method of claim 3, wherein the oracle conditions for store operations create new definitions for each scalar assigned to an address.

5. The method of claim 4, wherein the oracle conditions for load operations select a reaching definition for each scalar based on the new definitions created by the store operations.

6. The method of any one of claims 1 to 5, wherein generating the oracle conditions further comprises:
for each store operation:

calculating a pointer difference between a pointer operand of the store operation and a base pointer of the array (1114);
generating a select instruction that conditionally selects a stored value of the store operation based on comparing the pointer difference to each slot accessed by the load and store operations (1116); and
creating a new definition for each scalar mapped to the store operation using the select instruction (1118).

7. The method of claim 6, wherein generating the oracle conditions further comprises:
for each load operation:

calculating a pointer difference between a pointer operand of the load operation and the base pointer of the array (1120);
generating a select instruction that conditionally selects a reaching definition of each scalar mapped to the load operation based on comparing the pointer difference to each slot accessed by the load and store operations (1122), wherein the reaching definition is determined using the new definitions created for the store operations.

8. The method of any one of claims 1 to 7, further comprising:

performing uniformity analysis on index variables used in the load and store operations (1124); and
generating different oracle conditions based on whether an index variable is determined to be uniform or varying across threads of the GPU (1126).

9. The method of claim 8, wherein the oracle conditions for uniform index variables use a divide-and-conquer strategy to reduce a number of comparisons needed; and/or
wherein the oracle conditions for varying index variables use conditional select instructions to avoid divergent control flow.

10. The method of any one of claims 1 to 9, wherein the oracle conditions handle multiple non-constant stores and loads to the same location in the array; and/or
wherein the oracle conditions are generated using a static single assignment, in the following also referred to as SSA, algorithm that supports scalarization amid control flow.

11. The method of any one of claims 1 to 10, wherein the metadata is added to an intermediate representation of the program code by a compiler front-end.

12. The method of claim 11, wherein the oracle conditions are generated on the intermediate representation.

13. The method of any one of claims 1 to 12, wherein the array of structures is a multi-dimensional array.

14. An apparatus (1278) for generating code for a graphics processing unit, in the following also referred to as GPU, comprising:

a memory (1206); and

at least one processor (1204) coupled to the memory (1206) and configured to perform the method steps as defined in any one of the preceding claims.

15. A computer-readable medium (1206) storing computer executable code for generating code for a graphics processing unit, in the following also referred to as GPU, comprising code to perform the method steps as defined in any one of the preceding claims.

**FIG. 1**

200

**Before register promotion**

```
float temp[4];

temp[0] = 5.0; // store
temp[1]
temp[1] = 10.0;

... ...
T = temp[Index]; // T
= load temp[Index]
```

**After register promotion**

```
float temp[4];
// assign R0:3 to temp[0:3]
// temp[0] = 5.0
R0 = 5.0;
// temp[1] = 10.0
R1 = 10.0;
....
// T = temp[Index]
T == 0.0
If Index == 0:
    T = R0;
Else if Index == 1:
    T = R1;
Else if Index == 2:
    T = R2;
Else if Index == 3:
    T = R3;
```

**FIG. 2**

**300**

```
struct FCocTileSample{
    float FgdMinCoc;
    float FgdMaxCoc;
    float BgdMinCoc;
    float BgdMaxCoc;
    float BgdMinIntersectableCoc;
    float BgdMinConservativeCloserGoemetryDistance;
};
void main() {
    FCocTileSample t10[3]; // Array of struct created in
function scope
    while (u15 < 3u) {
        uint u16 = u15 + 1u;
        t10[int(u15)].BgdMinCoc = 16384.0; // EXAMPLE
...
```

**FIG. 3(A)**

**350**

| | Length in Bytes is 72 | | | | | | | | | | | | | | | | | | |
|---|---|---|---|---|---|---|---|---|---|---|---|---|---|---|---|---|---|---|---|
| | Array Element 0 | | | | | | Array Element 1 | | | | | | Array Element 2 | | | | | | END |
| Byte offset from Start of array | 0 | 4 | 8 | 12 | 16 | 20 | 24 | 28 | 32 | 36 | 40 | 44 | 48 | 52 | 56 | 60 | 64 | 68 | 72 |
| Field number | 0 | 1 | 2 | 3 | 4 | 5 | 0 | 1 | 2 | 3 | 4 | 5 | 0 | 1 | 2 | 3 | 4 | 5 | |

Stride of each array element is 24 bytes

Length of the entire array is 72 bytes

Formula to calculate the pointer to any field at an index, Index, of the array is Base_pointer_array + Stride * Index + field_offset

**FIG. 3(B)**

EP 4 693 024 A1

```
float Temp[4];
...
Temp[i] = T; // store T, base, I
...
T = Temp[i]  // a load from
Temp[i]
... ...
Temp[i] = R; // another store
later in program
...
T = Temp[i]; // T = load base, I
```

```
float Temp[4];

// Temp[i] = T
If (I == 0)
    r0 = T;
Else if (I == 1)
    r1 = T;
Else if (I == 2)
    r2 = T;
Else if (I == 3)
    r3 = T;
Endif
```

```
// T = Temp[i]
T = 0.0;
If (I == 0)
    T = r0;
Else if (I == 1)
    T = r1;
Else if (I == 2)
    T = r2;
Else if (I == 3)
    T = r3;
Endif
```

```
float Temp[4];
// Temp[i] = T
r0 = csel.eg I, 0, T, r0;
r1 = csel.eg I, 1, T, r1;
r2 = csel.eg I, 2, T, r2;
r3 = csel.eg I, 3, T, r3;

//T = Temp[i]
T= 0.0;
T = csel.eg I, 0, r0, T;
T = csel.eg I, 1, r1, T;
T = csel.eg I, 2, r2, T;
T = csel.eg I, 3, r3, T;
```

**FIG. 4(A)**    **FIG. 4(B)**    **FIG. 4(C)**    **FIG. 4(D)**

EP 4 693 024 A1

```
// Current solution uses 18 float variables, ex: R0:17//
t10[int(u15)].BgdMinCoc = 16384.0; // EXAMPLE
If index == 0: // index is the linearized byte offset for
u15, in bytes
  R0 = 16384.0
Else if index == 4:
  R1 = 16384.0
Else if index == 8:
  R2 = 16384.0
...
Else if index == 68 :
  R17 = 16384.0
```

## FIG. 5(A)

```
// Compiler uses 6 x 3 float variables, ex: R0:2,
S0:2, T0:2, etc.  for each field in the struct ...
//     t10[int(u15)].BgdMinCoc = 16384.0; //
EXAMPLE
If index == 8: // index is the linearized byte offset
for u15
  R0 = 16384.0
Else if index == 32:
  R1 = 16384.0
Else if index == 56
  R2 = 16384.0
```

## FIG. 5(B)

EP 4 693 024 A1

EP 4 693 024 A1

**620**

```
float temp[4][16];
...

T = temp[I][J]
...
```

**FIG. 6(A)**

**640**

```
float temp[4][16];
...
// Analysis shows I is varying, and J is uniform

If J < 8:
  If J < 4:
    If J < 2:
      if J == 1:
        T = CSEL V, 0.0 if I == 0
        T = CSEL W, T if I == 1
        T = CSEL U, T if I == 2
        T = CSEL X, T if I == 3
      Else:...
    Else: ...
  Else:
```

**FIG. 6(B)**

**720**

```
Find_Loads_Stores(A: Base-Pointer-of-Array) returns Set:
// Walks on def-use chain to obtain loads and stores
// from an array base
Worklist = EmptyList
Visited = EmptySet
Append(Worklist, A)
Add(Visited, A)
While !Empty(Worklist):
        elt = Pop(Worklist)
        If elt is load or store:
                If elt has metadata:
                        Add(ld_st, elt)
                        continue
                Else: // elt is missing metadata
                        return EmptySet
        For each user: U of elt:
                if !Member(Visited, U):
                        Append(Worklist, U)
                        Add(Visited, U)
return ld_st
```

## FIG. 7(A)

**740**

```
Assign_Scalars(A: Base-Pointer-of-Array, ldst_set: Set)
    returns Map, Map:
Slot_map = EmptyMap
Choices_map = EmptyMap
For ld_st in ldst_set:
        offset, stride, len = ld_st.metadata
        choices = EmptyList
        For I in [0: len):
                slot = offset + stride * I
                if slot not in Slot_map:
                        Slot_map[slot] =
generate_new_name()
                Append(choices, Slot_map[slot])
        Choices_map[ld_st] = choices
Return Slot_map, Choices_map
```

Legend:
Append(X, Y) adds an element Y to the end of a linked list, X
Add(X, Y) adds an element Y to a set X
X[Y] = Z is a map insertion operation, with map X, key Y and value Z
generate_new_name() generates a new entry in the compiler's symbol-table

## FIG. 7(B)

**820**

```
Oracle_insertion_stores( A: Base-Pointer-of-Array, Idst_set: Set,
                           Choices_map :
                           Map, Slot_map : Map ) returns Map:
 New_definitions : EmptyMap
 For Id_st in Idst_set:
         if Id_st is Load:
                 continue
         // Id_st is a Store
         slots = Choices_map[Id_st]
         PtrDiff = InsertIRInst( POINTERDIFF,
                                 Id_st.PointerOperand, A)
         // PtrDiff is equivalent to the offset from A for this load
         // Insert Oracle code
         SelectInst = InsertIRInst(CONSTANT, ZERO)
         for slot in slots:
                 CmpInst = InsertIRInst(COMPARE, slot, PtrDiff)

                 SelectInst = InsertIRInst( SELECT,
                                            Id_st.stored_value,
                                            SelectInst )
                 New_definitions[Slot_map[slot]] = SelectInst
 Return New_definitions
```

Legend:
InsertIRInst would Insert a new IR instruction
of type given by the first Operand and using
the rest of operands for inputs. It returns a
reference to the destination of the generated
instruction.
POINTERDIFF is used here in a similar sense
to std::ptrdiff_t in C++

## FIG. 8

EP 4 693 024 A1

**920**

```
Oracle_insertion_loads( A: Base-Pointer-of-Array,
                        New_definitions: Map,
                        ldst_set: Set,
                        Choices_map : Map,
                        Slot_map : Map ) returns None:
For ld_st in ldst_set:
    if ld_st is Store:
        continue
    slots = Choices_map[ld_st]
    PtrDiff = InsertIRInst( POINTERDIFF,
                            ld_st.PointerOperand, A)
    // PtrDiff is equivalent to the offset from A for this load as in
    // Algorithm-3
    // Insert Oracle code
    SelectInst = InsertIRInst(CONSTANT, ZERO)
    for slot in slots:
        CmpInst = InsertIRInst(COMPARE, slot, PtrDiff)
        SelectInst = InsertIRInst(SELECT,
                                  SSAUpdater.get(
                                  Slot_map[slot],
                                  New_definitions[Slot_map[slot]]),
                                  SelectInst )
Return
```

Legend:

InsertIRInst would Insert a new IR instruction of type given by the first Operand and using the rest of operands for inputs. It returns a reference to the destination of the generated instruction.

POINTERDIFF is used here in a similar sense to std::ptrdiff_t in C++

# FIG. 9

EP 4 693 024 A1

**1000**

Compiler
Driver

**1010**

Is there a function to process? — NO

YES

**1020**

NO — Is there an array to process in the function?

YES

**1030**

Algorithm: Find_Loads_Stores on an array

**1040**

Algorithm: Assign_Scalars on the array using ld_st: Set

**1050**

Algorithm: Oracle_Insertion_Stores
using ld_st: Set, Slot_map : Map,
Choices_map : Map

**1060**

Algorithm: Oracle_Insertion_Loads
using New_definitions : Map,
ld_st: Set, Slot_map : Map,
Choices_map : Map,
// Uses SSA Updating compiler APIs

# FIG. 10

1100

1102 — identify load and store operations in program code that access an array of structures

1104 — assign metadata to each of the identified load and store operations

1106 — operate to generate oracle conditions for the program code based on the metadata to facilitate register promotion

1108 — determine a set of possible addresses accessed by each load or store operation based on the metadata

1110 — assign a scalar to each unique address in the set of possible addresses

1112 — generate a condition for each scalar that compares an address of the load or store operation with the address corresponding to the scalar

1114 — calculate a pointer difference between a pointer operand of the store operation and a base pointer of the array

1116 — generate a select instruction that conditionally selects a stored value of the store operation based on comparing the pointer difference to each slot accessed by the load and store operations

1118 — create a new definition for each scalar mapped to the store operation using the select instruction

1120 — calculate a pointer difference between a pointer operand of the load operation and the base pointer of the array

1122 — generate a select instruction that conditionally selects a reaching definition of each scalar mapped to the load operation based on comparing the pointer difference to each slot accessed by the load and store operationsd

1124 — perform uniformity analysis on index variables used in the load and store operations

1126 — generate different oracle conditions based on whether an index variable is determined to be uniform or varying across threads of the GPU

**FIG. 11**

**FIG. 12**

Europäisches
Patentamt

European
Patent Office

Office européen
des brevets

# EUROPEAN SEARCH REPORT

**Application Number**

EP 24 19 7944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNSUP LEE ET AL: "Convergence and scalarization for data-parallel architectures", CODE GENERATION AND OPTIMIZATION (CGO), 2013 IEEE/ACM INTERNATIONAL SYMPOSIUM ON, IEEE, 23 February 2013 (2013-02-23), pages 1-11, XP032354951, DOI: 10.1109/CGO.2013.6494995 ISBN: 978-1-4673-5524-7 | 1-4,6, 8-15 | INV. G06F8/41 |
| A | * abstract * * page 1, right-hand column, paragraph 1 - page 2, left-hand column, paragraph 1 * * page 3, left-hand column, paragraph 2 - page 6, left-hand column, last paragraph * ----- | 5,7 | |
| A | SASTRY A V S ET AL: "A new algorithm for scalar register promotion based on SSA form", ACM SIGPLAN NOTICES, ASSOCIATION FOR COMPUTING MACHINERY, US, vol. 33, no. 5, 1 May 1998 (1998-05-01), pages 15-25, XP058235242, ISSN: 0362-1340, DOI: 10.1145/277652.277656 * abstract * * page 15, left-hand column, last paragraph - page 15, right-hand column, paragraph 2 * * page 16, left-hand column, paragraph 2 - page 21, left-hand column, paragraph 1 * ----- | 1-15 | TECHNICAL FIELDS SEARCHED (IPC) G06F |

-/--

The present search report has been drawn up for all claims

| Place of search | Date of completion of the search | Examiner |
|---|---|---|
| Munich | 27 January 2025 | Lelait, Sylvain |

EPO FORM 1503 03.82 (P04C01)

Europäisches
Patentamt

European
Patent Office

Office européen
des brevets

# EUROPEAN SEARCH REPORT

**Application Number**

EP 24 19 7944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOHN LU ET AL: "Register promotion in C programs", ACM SIGPLAN NOTICES, ASSOCIATION FOR COMPUTING MACHINERY, US, vol. 32, no. 5, 1 May 1997 (1997-05-01), pages 308-319, XP058374000, ISSN: 0362-1340, DOI: 10.1145/258916.258943 * abstract * * page 308, right-hand column, paragraph 1 - page 308, right-hand column, paragraph 2 * * page 309, left-hand column, paragraph 1 - page 313, left-hand column, paragraph 2 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 27 January 2025 | Lelait, Sylvain |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)